# EUROPÄISCHE PATENTSCHRIFT

(11) **EP 3 095 658 B1**
(45) Veröffentlichungstag und Bekanntmachung des Hinweises auf die Patenterteilung: **30.11.2022**
(21) Anmeldenummer: 16000918.9
(22) Anmeldetag: 22.04.2016
(51) Int. Cl.: B60W 20/40, F02N 11/00

(54) **VERFAHREN UND STEUERVORRICHTUNG ZUR REKUPERATION VON ENERGIE IN EINEM HYBRIDFAHRZEUG**
METHOD AND CONTROL DEVICE FOR RECOVERY OF ENERGY IN A HYBRID VEHICLE
PROCEDE ET DISPOSITIF DE COMMANDE DESTINES A RECUPERER DE L'ENERGIE DANS UN VEHICULE HYBRIDE

(30) Priorität: 19.05.2015 DE 102015006454
(43) Veröffentlichungstag der Anmeldung: 23.11.2016
(60) Teilanmeldung: 22201239.5
(73) Patentinhaber: MAN Truck & Bus SE, 80995 München (DE)
(72) Erfinder: Fischer, Detlef, 86441 Zusmarshausen (DE); Pfau, Stefan, 82377 Penzberg (DE); Hierlmeier, Matthias, 80997 München (DE)
(74) Vertreter: v. Bezold & Partner Patentanwälte - PartG mbB

(56) Entgegenhaltungen:
- EP-A1- 2 330 008
- WO-A1-2009/109826
- DE-A1-102007 024 471
- DE-A1-102010 034 672
- US-A1- 2009 212 626
- US-A1- 2011 276 243

## Beschreibung

Die Erfindung betrifft ein Verfahren zur Rekuperation von Energie in einem Hybridfahrzeug, das einen Verbrennungsmotor und eine elektrische Maschine umfasst und ein Bordnetz mit einem Energiespeicher aufweist, der im Rekuperationsbetrieb von der elektrischen Maschine mit elektrischer Energie aufladbar ist. Die Erfindung betrifft ferner eine Vorrichtung zur Steuerung eines Rekuperationsbetriebs in einem Hybridfahrzeug.

Durch stetig strenger werdende Abgasgesetzgebungen und Forderungen der Fahrzeughalter nach reduzierten Betriebskosten werden an Kraftfahrzeuge zunehmend hohe Anforderungen bezüglich ihres Kraftstoffverbrauchs und ihrer Schadstoffemissionen gestellt, während gleichzeitig ein hoher Fahrkomfort realisiert werden soll. Um dieses Ziel zu erreichen, ist es aus der Praxis bekannt, Kraftfahrzeuge mit einer Stopp-Start-Automatik-Vorrichtung auszustatten, mittels derer die Brennkraftmaschine unter vorbestimmten Bedingungen automatisch abgeschaltet und gestartet werden kann. So wird der Verbrennungsmotor beispielsweise automatisch abgeschaltet, wenn keine Antriebskraft benötigt wird, z. B. während des Anhaltens an einer Verkehrsampel. Sobald wieder Antriebskraft benötigt wird, wenn also etwa die Verkehrsampel auf "Grün" schaltet und der Fahrer das Gaspedal betätigt, erfolgt ein Neustart über den Elektromotor. Der Kraftstoffverbrauch des Fahrzeugs kann dadurch gesenkt werden.

Ferner ist es aus der Praxis bekannt, Kraftfahrzeuge mit Rekuperationssystemen auszustatten. Derartige Hybridfahrzeuge umfassen neben dem Verbrennungsmotor üblicherweise eine elektrische Maschine, die in Abhängigkeit von der Fahrsituation entweder im Motor- oder im Generatorbetrieb betrieben wird. Im Motorbetrieb erzeugt die elektrische Maschine ein zusätzliches Antriebsmoment, das den Verbrennungsmotor z. B. in einer Beschleunigungsphase unterstützt. Im Generatorbetrieb wird dagegen die bei der Verzögerung des Fahrzeugs frei werdende kinetische Energie in elektrische Energie gewandelt (Rekuperation). Die so gewonnene elektrische Energie wird in wenigstens einem Energiespeicher, wie z. B. einem UltraCap-Speicher, gespeichert und kann in anderen Fahrsituationen z. B. zum Antrieb des Fahrzeugs oder zur Versorgung elektrischer Verbraucher, genutzt werden. Der Wirkungsgrad des Fahrzeugs kann dadurch erheblich gesteigert werden.

Bei derartigen Fahrzeugen ist es ein üblicher Ansatz, dass im Rekuperationsbetrieb versucht wird, einen möglichst hohen Anteil der gewünschten Gesamtverzögerung, die der Fahrer z. B. durch Betätigung des Fußbremspedals vorgibt, durch den Generator auszuüben und somit ein Maximum an Energie zurückzugewinnen. Bei derartigen Fahrzeugen ist es daher eine gängige Betriebsstrategie, dass im Rekuperationsbetrieb mit der maximalen generatorischen Leistung rekuperiert wird, bis der wenigstens eine Energiespeicher zur Aufnahme von Rekuperationsenergie im Fahrzeug voll ist. Die Menge der vom Generator erzeugbaren elektrischen Energie ist jedoch abhängig vom Ladezustand bzw. der Aufnahmefähigkeit des Energiespeichers. Bei einem voll aufgeladenen Energiespeicher kann nur sehr wenig bzw. gar keine elektrische Energie in das Bordnetz gespeist werden, da der Energiespeicher andernfalls überlastet oder spannungsempfindliche Verbraucher beschädigt werden könnten. Die vom Generator abgegebene Leistung wird von einem Regler entsprechend eingestellt. Dies bedeutet, dass der Generator (inkl. Inverter) und Energiespeicher mit hohen Verlustleistungen betrieben werden und der Energiespeicher meistens ein hohes Energieniveau aufweist, obwohl es je nach Typ des Energiespeichers lebensdaueroptimale Energiefenster gibt. Insbesondere für Ultracap-Speicher reduziert der vollständig aufgeladene Zustand überdurchschnittlich stark die die Lebensdauerhaltbarkeit des Energiespeichers.

Das Dokument EP 2 330 008 A1 beschreibt ein industrielles Hybridfahrzeug mit einem Motor, einem Generatormotor, einer Batterie und einem Fahrmotor. Eine Steuerungseinheit für die erzeugte Leistung steuert den Generatormotor so, dass die erzeugte Leistung des Generatormotors gleich einer gesamten erzeugten Leistung wird, die aus der auf der Verzögerungsrate basierenden erforderlichen erzeugten Leistung und der auf der tatsächlichen Leistung basierenden erforderlichen erzeugten Leistung bestimmt wird.

Das Dokument US 2009/0212626 A1 offenbart u. a. ein Verfahren zum adaptiven Verwalten des Ladezustands eines Ultrakondensators oder einer anderen schnellen Energiespeichervorrichtung in dem dualen Energiespeichersystem eines Plug-in-Hybrid-Antriebssystems. Das Verfahren bietet einen guten Schutz der Batterie, eine gute Leistung und minimiert die erforderliche Kapazität des Ultrakondensators.

Das Dokument WO 2009/109826 A1 beschreibt ein Hybridfahrzeug, in dem eine Kupplung zwischen einem Motor und einem Motor / Generator angeordnet ist, das gesteuert wird, um ein häufiges Einrücken / Ausrücken der Kupplung in einem Fall eines Schubantriebs zu unterdrücken, während der Motor gezogen wird. Eine Kupplungssteuervorrichtung steuert die Kupplung und kann unter anderem einen Motorbremsantriebsmodus auswählen, in dem das Fahrzeug durch die Antriebskraft des Motors / Generators ausrollt oder fährt, während der Motor gezogen wird, in dem die Kupplung eingerückt ist, und die Kraftstoffzufuhr gestoppt wird, wenn eine Ladung der Batterie größer als oder ist gleich einem Schwellenwert.

Das Dokument US 2011/0276243 A1 offenbart u. a. ein regeneratives Bremssystem und einem Energiespeichersystem. Es wird ein Wert für eine Variable ermittelt, die sich auf einen Zustand bezieht, der die Energieaufnahme des Energiespeichersystems abbildet. Über den Wert wird eine Nutzbremsmomentkapazität für das Nutzbremsensystem ermittelt. Das regenerative Bremsen wird über das regenerative Bremssystem zumindest teilweise basierend auf der Kapazität des regenerativen Bremsmoments gesteuert.

Das Dokument DE 10 2010 034 672 A1 betrifft eine Vorrichtung und ein Verfahren zum Energiemanagement in einem elektrischen System eines Kraftfahrzeugs, wobei mindestens eine Steuereinheit einen Ladezustand mindestens einer Traktionsbatterie auf einen Soll-Ladezustand regelt, der niedriger ist als ein maximaler Ladezustand der Traktionsbatterie, wobei eine Differenz zwischen dem maximalen Ladezustand und dem Soll-Ladezustand in Abhängigkeit einer kinetischen Energie des Kraftfahrzeugs bestimmt wird.

Es ist somit eine Aufgabe der Erfindung, ein verbessertes Verfahren zur Rekuperation von Energie in einem Hybridfahrzeug bereitzustellen, mit dem Nachteile herkömmlicher Techniken vermieden werden können. Die Aufgabe der Erfindung ist es insbesondere, ein Verfahren zur Rekuperation von Energie in einem Hybridfahrzeug bereitzustellen, mit dem Verlustleistungen im Rekuperationssystem, insbesondere im Elektromotor, Inverter, Energiespeicher und/oder der Verkabelung, während des Rekuperationsbetriebs reduziert werden können und das eine komponentenschonende Betriebsweise ermöglicht. Eine weitere Aufgabe ist es, eine Vorrichtung zur Steuerung eines Rekuperationsbetriebs in einem Hybridfahrzeug bereitzustellen, mit der Nachteile herkömmlicher Vorrichtungen vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Rekuperation von Energie in einem Hybridfahrzeug bereitgestellt. Das Hybridfahrzeug umfasst einen Verbrennungsmotor, eine elektrische Maschine und vorzugsweise eine Stopp-Start-Automatik-Vorrichtung, mittels derer die Brennkraftmaschine unter vorbestimmten Bedingungen automatisch abgeschaltet und gestartet werden kann, und weist ein Bordnetz mit einem Energiespeicher auf, der im Rekuperationsbetrieb von der elektrischen Maschine mit elektrischer Energie aufladbar ist.

Gemäß einer ersten Maßnahme wird eine Rekuperationsleistung für einen Rekuperationsbetrieb der elektrischen Maschine auf einen ersten Wert festgelegt, nachfolgend auch als P_max bezeichnet, der einen Rekuperationsbetrieb mit einer maximalen generatorischen Leistungsfähigkeit der elektrischen Maschine ermöglicht, falls ein aktuelles Energieniveau des Energiespeichers kleiner gleich einem Schwellenwert ist, der nachfolgend als E_3 bezeichnet wird. Die Rekuperationsleistung für einen Rekuperationsbetrieb der elektrischen Maschine wird dagegen auf einen zweiten Wert festgelegt, nachfolgend auch als P_lim bezeichnet, der kleiner als der erste Wert P_max ist und einen Rekuperationsbetrieb mit einer reduzierten generatorischen Leistungsfähigkeit der elektrischen Maschine ermöglicht bzw. festlegt, falls das aktuelle Energieniveau des Energiespeichers größer als der Schwellenwert E_3 ist, d. h. E_ist > E_3.

Der Wert P_lim kann auf einen festen Wert oder auf einen variablen Wert unterhalb P_max festgelegt werden. Wird der Wert von P_lim variabel festgelegt, kann der Wert P_lim so berechnet werden, dass beim Ende der Rekuperation, d. h. nach Unterschreiten der Minimalgeschwindigkeit, bis zu der eine Rekuperation möglich ist, der Energiespeicher vollgeladen ist. Die Rekuperationsleistung wird durch eine Vorrichtung zur Steuerung der elektrischen Maschine vorgeben, so dass in einem Rekuperationsbetrieb der elektrischen Maschine Leistung in Höhe der festgelegten Rekuperationsleistung rekuperiert wird.

Gemäß der ersten Maßnahme wird somit die von der elektrischen Maschine im generatorischen Betrieb abgegebene Leistung auf den Wert P_lim unterhalb der Maximalleistung P_max reduziert, falls das Energieniveau bzw. der Ladezustand des Energiespeichers ein vorbestimmtes Niveau überschreitet. Dadurch können die Betriebsphasen, in denen der Energiespeicher zur Aufnahme der Rekuperationsenergie und die elektrische Maschine mit hohen Verlustleistungen betrieben werden, erheblich reduziert werden und eine komponentenschonendere Betriebsweise realisiert werden.

Erfindungsgemäß wird für einen aktuellen Betriebszustand des Kraftfahrzeugs eine Rekuperationsenergie E_rek prädiziert, d. h. vorhergesagt bzw. abgeschätzt, die angibt, wieviel Energie rekuperierbar wäre, falls das Kraftfahrzeug ausgehend vom momentanen Fahrzustand bis mindestens auf einen Geschwindigkeitsschwellenwert abgebremst würde. Der Geschwindigkeitsschwellenwert gibt hierbei vorzugsweise eine Geschwindigkeitsgrenze an, oberhalb derer Energie im Rekuperationsbetrieb rekuperierbar ist und unterhalb derer kein Rekuperationsbetrieb möglich ist. Die Rekuperationsenergie E_rek schätzt somit ab, wieviel Energie aus der kinetischen Bewegungsenergie des Kraftfahrzeugs durchschnittlich rekuperierbar ist, falls das Kraftfahrzeug bis zum Stillstand abgebremst wird und beispielsweise in eine Stopp-Phase des Stopp-Start-Betriebs übergeht. Das Abschätzen dieser Rekuperationsenergie E_rek bietet den Vorteil, dass unter Berücksichtigung des aktuellen Energiespeicherniveaus des Energiespeichers auf diese Weise genauer abgeschätzt werden kann, ob ein "Überladen" des Energiespeichers bzw. die damit verbundenen Verlustleistungen beim nächsten Rekuperationsvorgang drohen und ob bei Beginn einer kommenden Stopp-Phase des Stopp-Start-Betriebs ausreichend Energie im Energiespeicher zur Verfügung stehen wird.

Bei einer vorteilhaften Variante dieser Ausgestaltungsform wird der Schwellenwert E_3 als Differenz aus einem maximalen Energieniveau E_max des Energiespeichers, d. h. einem Zustand, bei dem der Energiespeicher innerhalb der vorgegebenen Betriebsgrenzen vollständig geladen ist, und der prädizierten Rekuperationsenergie E_rek festgelegt, d. h. E_3 = E_max minus E_rek. Entspricht das aktuelle Energieniveau E_ist gerade dem Schwellenwert E_3, kann durch einen Rekuperationsbetrieb der Speicher gerade bis zum Maximalniveau E_max vollständig geladen werden, falls das Fahrzeug in den Stillstand abgebremst wird. Würde das aktuelle Energieniveau bei Beginn des Rekuperationsbetriebs über dem Schwellenwert E_3 liegen, würde ein herkömmlicher Rekuperationsbetrieb mit maximaler Leistungsfähigkeit des Generators zur einer Verlustleistung führen, die erfindungsgemäß jedoch vermieden oder zumindest reduziert wird, indem die Leistungsfähigkeit des Generators in diesem Fall auf P_lim heruntergesetzt wird.

Die prädizierte Rekuperationsenergie E_rek kann in Abhängigkeit von einer aktuellen Fahrzeuggeschwindigkeit, einer durchschnittlichen Fahrzeugverzögerung, einer Bordnetzlast und einer maximalen generatorischen Leistungsfähigkeit P_max des Rekuperationsbetriebs bestimmt werden. So kann eine voraussichtliche Rekuperationsdauer bzw. Bremsdauer aus der aktuellen Fahrzeuggeschwindigkeit und einer angenommenen durchschnittlichen Fahrzeugverzögerung abgeschätzt werden. Basierend auf der voraussichtlichen Bremsdauer ergibt sich dann aus einer angenommenen Rekuperationsleistung, z. B. unter Annahme einer maximalen generatorischen Leistungsfähigkeit P_max des Generators, abzüglich der aktuellen Bordnetzlast die voraussichtlich rekuperierbare Energie, falls das Fahrzeug zum Stillstand gebracht wird. Auf diese Weise kann ausgehend vom momentanen Fahrzustand des Fahrzeugs die voraussichtlich rekuperierbare Energie genau vorhergesagt bzw. abgeschätzt werden.

Besonders vorteilhaft ist ferner, wenn die prädizierte Rekuperationsenergie E_rek und/oder der Schwellenwert E_3 im Fahrbetrieb fortlaufend neu berechnet werden, so dass die Werte für die prädizierte Rekuperationsenergie E_rek und/oder den Schwellenwert E_3 angepasst werden, sobald sich der Fahrzeugzustand, insbesondere die Fahrzeuggeschwindigkeit, ändert. Die durchschnittliche Fahrzeugverzögerung kann angeben, mit welcher Durchschnittsverzögerung das Kraftfahrzeug bei einem Rekuperationsvorgang verzögert wird, und vorab im Kraftfahrzug hinterlegt sein. Für den Wert der Bordnetzlast wird vorzugsweise ein momentaner Wert der Bordnetzlast bestimmt. Alternativ kann auch ein vorab hinterlegter Wert für eine durchschnittliche Bordnetzlast verwendet werden.

Umfasst das Hybridfahrzeug eine Stopp-Start-Automatik-Vorrichtung, mittels derer die Brennkraftmaschine unter vorbestimmten Bedingungen automatisch abgeschaltet und gestartet werden kann, kann gemäß einer weiteren Maßnahme ein Minimalschwellenwert E_min für ein Energieniveau des Energiespeichers in Abhängigkeit von der prädizierten Rekuperationsenergie E_rek und einer Mindestenergie E_Stopp, die durchschnittlich für eine Motorstoppphase eines Stopp-Start-Betriebs benötigt wird, bestimmt werden.

Hierbei kann die Mindestenergie E_Stopp, die durchschnittlich für eine Motorstoppphase eines Stopp-Start-Betriebs benötigt wird, als Summe aus einer Motorstartenergie E_1 für den Start-Stopp-Betrieb und einem Energiebedarf E_2 für eine Bordnetzversorgung während einer Stopp-Phase des Stopp-Start-Betriebs bestimmt werden. Die Motorstartenergie E_1 gibt hierbei an, wieviel elektrische Energie aus dem Energiespeicher für den Warmstart des Verbrennungsmotors im Rahmen des Stopp-Start-Betriebs benötigt wird, wobei die elektrische Maschine als Startermotor dient. Der Energiebedarf E_2 für die Bordnetzversorgung kann in Abhängigkeit von einer durchschnittlichen Fahrzeugstillstandszeit in der Stopp-Phase und einer durchschnittlichen Bordnetzlast bestimmt werden. Vorzugsweise wird der Minimalschwellenwert E_min im Fahrbetrieb fortlaufend neu berechnet.

Auf diese Weise kann sichergestellt werden, dass bei Fahrzeugstillstand genügend Energie für die Grundfunktionen, z. B. Motorstart und Bordnetzversorgung, während der Stopp-Phase, vorhanden ist.

Eine vorteilhafte Variante dieser Maßnahme sieht vor, dass der Minimalschwellenwert E_min auf einen Wert unterhalb der Mindestenergie E_Stopp, die durchschnittlich für eine Motorstoppphase eines Stopp-Start-Betriebs benötigt wird, festgelegt wird, falls die Summe aus dem aktuellen Energieniveau E_ist des Energiespeichers und der prädizierten Rekuperationsenergie E_rek größer als die Mindestenergie E_Stopp ist. Dadurch kann das Energiespeichermanagement weiter optimiert werden. Ist die Summe aus dem aktuellen Energieniveau E_ist des Energiespeichers und der prädizierten Rekuperationsenergie E_rek kleiner gleich der Mindestenergie E_Stopp, wird E_min auf den Wert von E_Stopp festgelegt.

Bei Unterschreiten des Minimalschwellenwerts E_min des Energiespeichers im Fahrbetrieb kann das Energieniveau E_ist des Energiespeichers mittels einer Lastpunktanhebung des Verbrennungsmotors erhöht werden. Ferner kann der Verbrennungsmotor in einer Stopp-Phase gestartet werden, falls das Energieniveau E_ist im Energiespeicher während einer Stopp-Phase auf einen Wert fällt, der der Motorstartenergie E_1 entspricht.

Das Energieniveau des Energiespeichers entspricht jeweils einem bestimmten Ladezustand des Energiespeichers, so dass in Sinne dieses Dokuments anstatt der verwendeten Energieniveauwerte auch analog die entsprechenden Ladezustandsschwellenwerte verwendet werden können, so dass unter den Wortsinn Energieniveau des Energiespeichers vorliegend auch der Ladezustand des Energiespeichers fallen soll. Beispielsweise kann das aktuelle Energieniveau E_ist auch als aktueller Ladezustand (SOC) des Energiespeichers ermittelt werden, und der Schwellenwert E_3 kann dann als entsprechender Ladezustandsschwellenwert festgelegt werden.

Vorstehend wurde bereits erwähnt, dass der zweite Wert P_lim für die Rekuperationsleistung des Rekuperationsbetriebs der elektrischen Maschine variabel festgelegt wird.

Gemäß einer besonders bevorzugten Ausführungsvariante wird P_lim jeweils so festgelegt, dass der Energiespeicher am Ende eines nachfolgenden Rekuperationsvorgangs vollgeladen wäre, falls das Kraftfahrzeug ausgehend vom momentanen Fahrzustand bis mindestens auf einen Geschwindigkeitsschwellenwert abgebremst würde, wobei der Geschwindigkeitsschwellenwert, vorstehend bereits als v_min bezeichnet, vorzugsweise eine Geschwindigkeitsgrenze angibt, oberhalb derer Energie im Rekuperationsbetrieb rekuperierbar ist und unterhalb derer kein Rekuperationsbetrieb möglich ist. Beispielsweise kann P_lim gemäß der Formel P_lim = ((E_max - E_ist) + P_Bord*t_rek))/ t_rek berechnet werden, wobei E_max das maximale und E_ist das aktuelle Energieniveau des Energiespeichers und P_Bord eine durchschnittliche angenommene oder momentane Bordnetzlast angibt und t_rek eine Abschätzung für eine Dauer eines Rekuperationsvorgangs angibt, der aus der Differenz aus der aktuellen Fahrzeuggeschwindigkeit v_ist und dem Geschwindigkeitsschwellenwert v_min geteilt durch die angenommene durchschnittliche Fahrzeugverzögerung a_brems abgeschätzt werden kann, d. h. t_rek = (v_ist - v_min)/a_brems. Die Größe t_rek entspricht der vorstehend genannten durchschnittlichen Bremsdauer, während derer Energie in einem Rekuperationsmodus rekuperierbar ist.

Gemäß einem zweiten Gesichtspunkt der Erfindung wird eine Vorrichtung zur Steuerung eines Rekuperationsbetriebs in einem Hybridfahrzeug, das einen Verbrennungsmotor, eine elektrische Maschine und vorzugsweise eine Stopp-Start-Automatik-Vorrichtung, mittels derer die Brennkraftmaschine unter vorbestimmten Bedingungen automatisch abgeschaltet und gestartet werden kann, umfasst und ein Bordnetz mit einem Energiespeicher aufweist, der im Rekuperationsbetrieb von der elektrischen Maschine mit elektrischer Energie aufladbar ist, bereitgestellt. Die Vorrichtung ist erfindungsgemäß eingerichtet, das Verfahren wie in diesem Dokument beschrieben auszuführen. Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, gelten somit auch für die Vorrichtung.

Die Erfindung betrifft ferner ein Kraftfahrzeug, insbesondere ein Nutzfahrzeug, aufweisend eine derartige Vorrichtung zur Steuerung des Rekuperationsbetriebs.

Weitere Einzelheiten und Vorteile der Erfindung werden im Folgenden unter Bezug auf die beigefügten Zeichnungen beschrieben. Es illustrieren:
- Figur 1: ein Bordnetz eines Hybridfahrzeugs; und
- Figuren 2 bis 4: die Variation der Rekuperationsleistung in Abhängigkeit von dem momentanen Betriebszustand des Hybridfahrzeugs gemäß einem Ausführungsbeispiel der Erfindung.

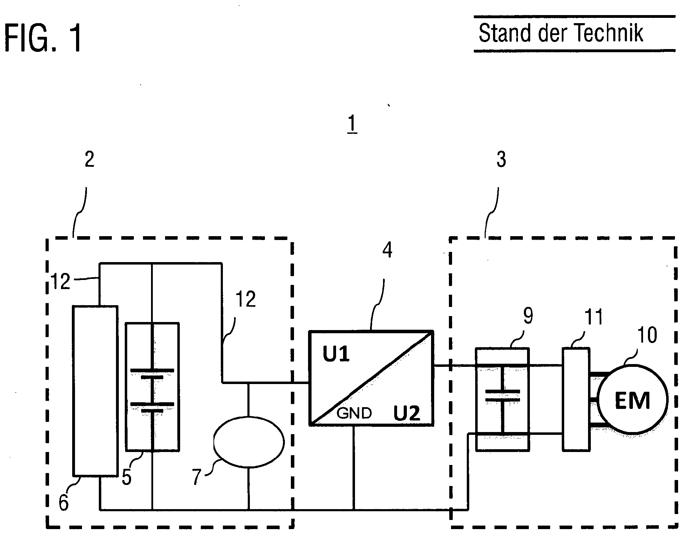

Figur 1 zeigt schematisch ein Beispiel für ein an sich aus dem Stand der Technik bekanntes Bordnetz 1 eines Hybridfahrzeugs, insbesondere eines Nutzfahrzeugs. Das Bordnetz 1 weist zwei Teilnetze 2, 3 auf:
Ein erstes Teilnetz 2, in dem eine erste Netzspannung U1 anliegt und das einen ersten Energiespeicher 5 und einen Lastwiderstand 6 umfasst. Der Lastwiderstand 6 ist durch wenigstens einen, vorzugsweise durch mehrere Verbraucher gebildet. Im ersten Teilnetz 2 ist ferner ein konventioneller Starter 7 für den Verbrennungsmotor vorgesehen.

Ferner ein zweites Teilnetz 3, in dem eine zweite Netzspannung U2 anliegt und in dem eine elektrische Maschine 10 vorgesehen ist. Die elektrische Maschine 10 ist zum Starten eines Verbrennungsmotors (nicht gezeigt) des Kraftfahrzeugs und zum Generatorbetrieb bzw. Rekuperationsbetrieb ausgebildet und kann beispielsweise als Kurbelwellenstartergenerator ausgeführt sein. Im zweiten Teilnetz 3 ist ferner ein zweiter Energiespeicher 9 vorgesehen, z. B. ein hochkapazitiver Speicher (Ultracap-Speicher), der mit der elektrischen Maschine 10 über einen Inverter 11 verbindbar ist. Der zweite Energiespeicher 9 ist ausgebildet, von der elektrischen Maschine 10 in dem Generatorbetrieb bzw. Rekuperationsbetrieb erzeugte elektrische Ladung zu speichern. Der erste Energiespeicher 5 kann ebenfalls als Kondensatorspeicher ausgebildet sein oder als herkömmlicher Bleiakkumulator. Die Stromleitungen 12 sind in Figur 1 mit durchgezogenen schwarzen Linien gekennzeichnet.

Das Bordnetz 1 umfasst ferner einen Gleichspannungswandler (DC/DC-Wandler) 4, der das erste Teilnetz 2 mit dem zweiten Teilnetz 3 bidirektional verbindet. Der Gleichspannungswandler 4 ist ausgebildet, eine Gleichspannung aus einem der Teilnetze 2, 3, beispielsweise eine Gleichspannung, mit der das erste Teilnetz 2 betrieben wird, zu empfangen und eine Ausgangsspannung zu erzeugen, welche von der eingangsseitig empfangenen Spannung verschieden ist.

Das Bordnetz 1 bzw. 21 umfasst ferner eine Steuereinheit (nicht gezeigt), die über entsprechende Signalleitungen (nicht gezeigt) mit den entsprechenden Komponenten des Bordnetzes 1, 21 verbunden ist, insbesondere dem Spannungswandler 4, den Energiespeichern 5 und 9 sowie der elektrischen Maschine 10.

Die Steuereinheit empfängt von den Energiespeichern 5, 9 bzw. dem Ladungszustandssensor 8 und von einem Speichermanagementsystem (nicht gezeigt) des Energiespeichers 9 Daten über den Ladungszustand der Energiespeicher 5, 9. Die Steuereinheit ist ferner ausgebildet, an den Spannungswandler 4 in Abhängigkeit von den empfangenen Ladungszuständen entsprechende Steuersignale auszugeben. In Abhängigkeit von den von der Steuereinheit empfangenen Steuersignalen ist der Spannungswandler 4 eingerichtet, Energie vom ersten Teilnetz 2 in das zweite Teilnetz 3 zu übertragen und umgekehrt.

Es wird betont, dass die in Figur 1 dargestellte Bordnetztopologie lediglich beispielhaft ist und aus dem Stand der Technik eine Vielzahl weiterer Varianten von Bordnetztopologien zur Einbindung einer elektrischen Maschine und eines elektrischen Energiespeichers für den Hybridbetrieb bekannt ist, mit denen das erfindungsgemäße Verfahren ebenfalls ausführbar ist.

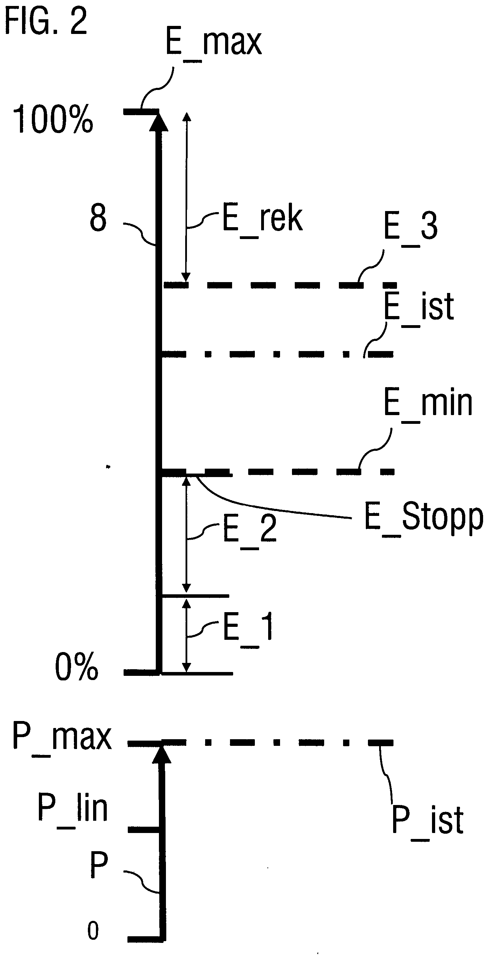

Die Steuereinheit ist erfindungsgemäß insbesondere eingerichtet, das Verfahren zur Steuerung eines Rekuperationsbetriebs durchzuführen und hierbei über den Inverter 11 die Rekuperationsleistung der elektrischen Maschine 10 zu variieren, was nachfolgend anhand der Figuren 2 bis 4 beispielhaft illustriert ist.

Figur 2 illustriert im oberen Diagramm momentane Werte für das Energieniveau des Energiespeichers E_ist und den Schwellenwert E_3 für einen bestimmten Betriebszustand des Fahrzeugs. Im unteren Diagramm ist der hierzu korrespondierende Wert der vorgegebenen Rekuperationsleistung P_ist gezeigt.

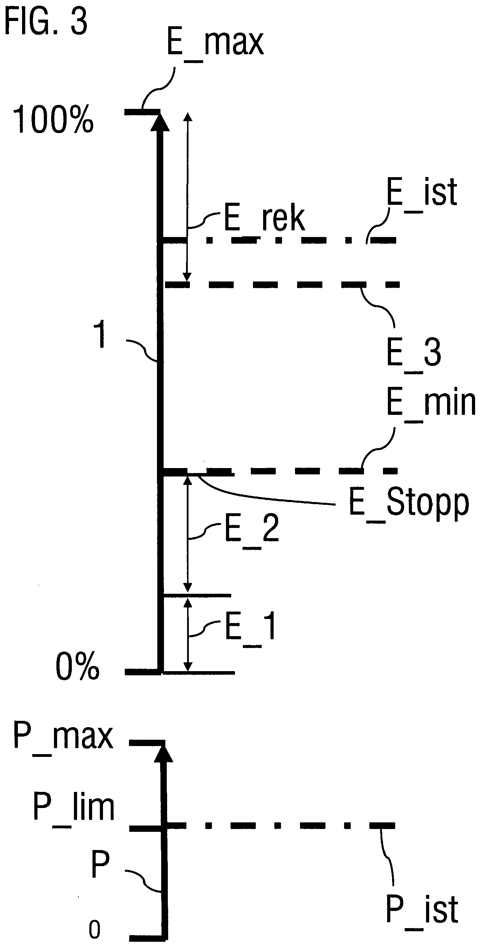

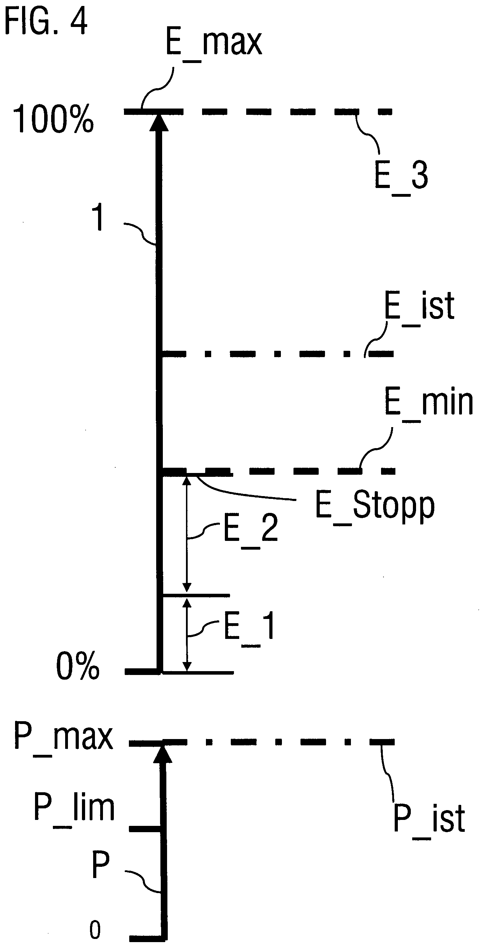

Die Figuren 3 und 4 zeigen entsprechende Werte für das Energieniveau E_ist, den Schwellenwert E_3 und die aktuell festgelegte Rekuperationsleistung P_ist in anderen Betriebszuständen des Fahrzeugs. Hierbei entsprechen Größen mit gleichen Bezugszeichen den Größen der Figur 1, und werden nicht gesondert beschrieben.

In Figur 2 gibt die Achse 8 das Niveau des Energiespeichers 9 an. Das Energieniveau E_max gibt das Energieniveau eines vollständig geladenen Energiespeichers an. Die strichgepunktete Linie gibt das momentane Energieniveau E_ist korrespondierend zu dem aktuellen Ladezustand (SOC) des Energiespeichers 9 an, das fortlaufend bestimmt und überwacht wird.

Die Länge des mit dem Bezugszeichen E_rek gekennzeichneten Pfeils gibt die Höhe einer aktuell prädizierten Rekuperationsenergie an. E_rek gibt an, wieviel Energie rekuperierbar wäre, falls das Kraftfahrzeug ausgehend vom momentanen Fahrzustand bis mindestens auf einen Geschwindigkeitsschwellenwert v_min abgebremst würde. Der Geschwindigkeitsschwellenwert v_min gibt die Geschwindigkeitsgrenze an, bis zu der Energie im Rekuperationsbetrieb rekuperierbar ist. Bei einer Fahrgeschwindigkeit unterhalb von v_min wird keine Energie mehr rekuperiert.

E_rek wird fortlaufend im Fahrbetrieb berechnet. Hierzu wird aus der aktuellen Fahrzeuggeschwindigkeit und aus einer hinterlegten durchschnittlichen Fahrzeugverzögerung eine durchschnittliche Bremsdauer berechnet, während derer Energie in einem Rekuperationsmodus rekuperierbar ist. Je schneller das Fahrzeug fährt, desto länger ist die durchschnittliche Bremsdauer und damit die durchschnittliche Dauer einer Rekuperationsphase. Unter Annahme einer eingestellten maximalen generatorischen Leistungsfähigkeit P_max der elektrischen Maschine 10 im Rekuperationsbetrieb ergibt sich abzüglich der durchschnittlichen Bordnetzlast eine durchschnittliche Rekuperationsleistung, die multipliziert mit der durchschnittlichen Bremsdauer die prädizierte Rekuperationsenergie E_rek ergibt.

In Abhängigkeit von der bestimmten Rekuperationsenergie E_rek wird die Energieschwelle E_3 fortlaufend festgelegt als E_3 = E_max minus E_rek.

Falls das aktuelle Energieniveau E_ist des Energiespeichers 9 kleiner gleich dem Schwellenwert E_3 ist, wird die aktuelle Rekuperationsleistung P_ist für einen Rekuperationsbetrieb der elektrischen Maschine 10 auf die maximale Leistungsfähigkeit P_max festgelegt, so dass der Rekuperationsbetrieb mit einer maximalen generatorischen Leistungsfähigkeit der elektrischen Maschine erfolgt.

Falls das aktuelle Energieniveau E_ist des Energiespeichers jedoch größer als der Schwellenwert E_3 ist, wird die Rekuperationsleistung P_ist für einen Rekuperationsbetrieb der elektrischen Maschine 10 jedoch auf einen Wert P_lim festgelegt, der kleiner als der erste Wert P_max ist und einen Rekuperationsbetrieb mit einer reduzierten generatorischen Leistungsfähigkeit der elektrischen Maschine 10 ermöglicht bzw. festlegt.

Im Beispiel der Figur 2 ist das aktuelle Energiespeicherniveau E_ist kleiner als E_3, so dass P_ist auf den Wert P_max eingestellt wird, was im unteren Diagramm der Figur 2 dargestellt ist. Würde somit nun ein Rekuperationsbetrieb beginnen, würde dieser mit der maximalen Rekuperationsleistung P_max erfolgen.

Figur 3 entspricht einem Betriebszustand des Fahrzeugs, bei dem das aktuelle Energiespeicherniveau E_ist über dem Energieschwellenwert E_3 liegt, so dass in diesem Fall die Rekuperationsleistung P_ist auf einen reduzierten Wert P_lim festgelegt wird. Würde in diesem Fall nun ein Rekuperationsbetrieb beginnen, würde dieser nur mit der reduzierten Rekuperationsleistung P_lim erfolgen.

Vorstehend wurde bereits erwähnt, dass die Rekuperationsenergie E_rek fortlaufend prädiziert wird und der Energieschwellenwert E_3 entsprechend ebenfalls fortlaufend angepasst wird. Figur 4 zeigt ein Beispiel, bei dem E_3 auf den Wert E_max gesetzt wurde. Dies entspricht beispielsweise einem Betriebszustand des Fahrzeugs, bei dem die aktuelle Fahrzeuggeschwindigkeit unterhalb der Schwelle v_min liegt, so dass der Wert für die prädizierte Rekuperationsenergie E_rek null ist. Folglich ergibt sich ein Wert von E_max für E_3.

In den Figuren 2 bis 4 sind ferner die Energieniveaus E_1, E_2, E_Stopp und E_min dargestellt. Das mit E_Stopp gekennzeichnete Energieniveau gibt das Mindestenergieniveau an, das im Speicher 9 zu Beginn einer Stopp-Phase enthalten sein muss. Das Energieniveau E_Stopp setzt sich additiv aus einer Motorstartenergie E_1, die für den Warmstart des Verbrennungsmotors im Rahmen des Stopp-Start-Betriebs benötigt wird, und einem Energiebedarf E_2 für die Bordnetzversorgung zusammen. Der Energiebedarf E_2 ergibt sich aus einer hinterlegten durchschnittlichen Fahrzeugstillstandszeit der Stopp-Phase, d. h. einer angenommenen durchschnittlichen Dauer der Stopp-Phase, und einer durchschnittlichen Bordnetzlast während der Stopp-Phase.

Wenn die elektrische Maschine 10 während einer Motorstoppphase keine Energie erzeugen kann, wird die Energie im Speicher 9 bis zur Schwelle E_1 aufgebraucht und dann der Verbrennungsmotor zwangsgestartet. Die Stopp-Phase des Verbrennungsmotors wird somit vorzeitig abgebrochen. Eine Möglichkeit ist hierbei, anschließend den Energiespeicher 9 wieder durch den Elektromotor aufzuladen, so dass der Verbrennungsmotor anschließend wieder gestoppt werden kann, falls sich das Fahrzeug immer noch im Stillstand befindet, d. h., der Fahrer hat noch kein Ende des Stopp-Start-Betriebs, beispielsweise durch Betätigen des Gaspedals, signalisiert. Alternativ kann nach dem erzwungenen Start des Verbrennungsmotors ein Betrieb des Verbrennungsmotors im Leerlaufbetrieb erfolgen, bis der Fahrer das Ende der Stopp-Phase signalisiert.

E_min gibt einen Schwellenwert für das Energieniveau an, bei dessen Unterschreiten im Fahrbetrieb eine Lastpunktanhebung des Verbrennungsmotors gestartet wird, um über die dadurch erzeugte überschüssige Energie den Energiespeicher auf mindestens den Wert E_min aufzuladen. In den Ausführungsbeispielen der Figuren 2 bis 4 wird E_min auf den Wert von E_Stopp = E1 plus E2 gesetzt.

Gemäß einer weiteren Ausführungsvariante kann E_min fortlaufend in Abhängigkeit von der durchschnittlichen Bordnetzlast, der benötigten Motorstartenergie E_1, der durchschnittlichen Fahrzeugverzögerung, der Fahrzeuggeschwindigkeit und der erwarteten Fahrzeugstillstandszeit neu berechnet werden. Insbesondere kann E_min in Abhängigkeit von der prädizierten Rekuperationsenergie E_rek und der Mindestenergie E_Stopp, die durchschnittlich für eine Motorstoppphase eines Stopp-Start-Betriebs benötigt wird, bestimmt werden.

Beispielsweise kann der Minimalschwellenwert E_min gemäß dieser Variante auf einen Wert unterhalb der Mindestenergie E_Stopp festgelegt werden (nicht gezeigt), falls die Summe aus dem aktuellen Energieniveau E_ist des Energiespeichers und der prädizierten Rekuperationsenergie E_rek größer als die Mindestenergie E_Stopp ist. Hierbei wird berücksichtigt, dass aus der aktuellen kinetischen Energie des Fahrzeugs noch genügend Energie rekuperiert werden kann, um zu Beginn der nächsten Stopp-Phase den Energiespeicher 9 bis auf mindestens den Wert E_Stopp aufzuladen. Falls die Summe aus dem aktuellen Energieniveau E_ist des Energiespeichers und der prädizierten Rekuperationsenergie E_rek kleiner gleich der Mindestenergie E_Stopp ist, wird E_min auf den Wert von E_Stopp gesetzt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der gemäß der beigefügten Patentansprüche definierten

Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Bordnetz
- 2: Erstes Teilnetz
- 3: Zweites Teilnetz
- 4: Spannungswandler
- 5: Erster Energiespeicher
- 6: Lastwiderstand
- 7: Starter
- 8: Energieniveau des Energiespeichers 9
- 9: Zweiter Energiespeicher
- 10: Elektrische Maschine
- 11: Inverter
- 12: Stromleitungen
- E_1: Motorstartenergie
- E_2: Energievorhalt für Bordnetzversorgung während Fahrzeugstopp
- E_3: Schwellenwert
- E_max: Maximales Energieniveau des Energiespeichers
- E_ist: Aktuelles Energieniveau des Energiespeichers
- E_Stopp: Benötigte Mindestenergie während Fahrzeugstopp
- E_min: Benötigte Mindestenergie während Fahrzeugstopp unter Berücksichtigung von E_rek
- E_rek: Aktuell rekuperierbare Energie
- P_max: Maximale Rekuperationsleistung für Rekuperationsbetrieb
- P_lim: Limitierte Rekuperationsleistung für Rekuperationsbetrieb

## Patentansprüche

1. Verfahren zur Rekuperation von Energie in einem Hybridfahrzeug, das einen Verbrennungsmotor, eine elektrische Maschine (10) und vorzugsweise eine Stopp-Start-Automatik-Vorrichtung, mittels der die Brennkraftmaschine unter vorbestimmten Bedingungen automatisch abgeschaltet und gestartet werden kann, umfasst und ein Bordnetz (1) mit einem Energiespeicher (9) aufweist, der im Rekuperationsbetrieb von der elektrischen Maschine (10) mit elektrischer Energie aufladbar ist, wobei eine Rekuperationsleistung (P_ist) für einen Rekuperationsbetrieb der elektrischen Maschine (10)
(a) auf einen ersten Wert (P_max) festgelegt wird, der einen Rekuperationsbetrieb mit einer maximalen generatorischen Leistungsfähigkeit der elektrischen Maschine ermöglicht, falls ein aktuelles Energieniveau (E_ist) des Energiespeichers (9) kleiner gleich einem Schwellenwert (E_3) ist; und
(b) auf einen zweiten Wert (P_lim) festgelegt wird, der kleiner als der erste Wert (P_max) ist und einen Rekuperationsbetrieb mit einer reduzierten generatorischen Leistungsfähigkeit der elektrischen Maschine (10) ermöglicht, falls das aktuelle Energieniveau (E_ist) des Energiespeichers (9) größer als der Schwellenwert (E_3) ist **dadurch gekennzeichnet,**
**dass** für einen aktuellen Betriebszustand des Kraftfahrzeugs eine Rekuperationsenergie (E_rek) prädiziert wird, die angibt, wieviel Energie rekuperierbar wäre, falls das Kraftfahrzeug ausgehend vom momentanen Fahrzustand bis mindestens auf einen Geschwindigkeitsschwellenwert (v_min) abgebremst würde, wobei der Geschwindigkeitsschwellenwert vorzugsweise eine Geschwindigkeitsgrenze angibt, oberhalb derer Energie im Rekuperationsbetrieb rekuperierbar ist und unterhalb derer kein Rekuperationsbetrieb möglich ist.

2. Verfahren nach Anspruch 1, **dadurch gekennzeichnet, dass** der Schwellenwert (E_3) als Differenz aus einem maximalen Energieniveau (E_max) des Energiespeichers (9) und der prädizierten Rekuperationsenergie (E_rek) festgelegt wird.

3. Verfahren nach Anspruch 1 oder 2, **dadurch gekennzeichnet, dass** die prädizierte Rekuperationsenergie (E_rek) in Abhängigkeit von einer aktuellen Fahrzeuggeschwindigkeit, einer durchschnittlichen Fahrzeugverzögerung, einer Bordnetzlast und einer maximalen generatorischen Leistungsfähigkeit (P_max) des Rekuperationsbetriebs bestimmt wird.

4. Verfahren nach einem der vorhergehenden Ansprüche, **dadurch gekennzeichnet, dass** der Schwellenwert (E_3) im Fahrbetrieb fortlaufend neu berechnet wird.

5. Verfahren nach einem der vorhergehenden Ansprüche 1 bis 4, **dadurch gekennzeichnet, dass** ein Minimalschwellenwert (E_min) für ein Energieniveau des Energiespeichers (9) in Abhängigkeit von der prädizierten Rekuperationsenergie (E_rek) und einer Mindestenergie (E_Stopp), die durchschnittlich für eine Motorstoppphase eines Stopp-Start-Betriebs benötigt wird, bestimmt wird.

6. Verfahren nach Anspruch 5, **dadurch gekennzeichnet, dass** die Mindestenergie (E_Stopp), die durchschnittlich für eine Motorstoppphase eines Stopp-Start-Betriebs benötigt wird, als Summe aus einer Motorstartenergie (E_1) für den Start-Stopp-Betrieb und einem Energiebedarf (E_2) für eine Bordnetzversorgung während einer Stopp-Phase des Stopp-Start-Betriebs bestimmt wird, wobei der Energiebedarf (E_2) für die Bordnetzversorgung in Abhängigkeit von einer durchschnittlichen Fahrzeugstillstandszeit der Stopp-Phase und einer durchschnittlichen Bordnetzlast bestimmt wird.

7. Verfahren nach einem der Ansprüche 5 oder 6, **dadurch gekennzeichnet, dass** der Minimalschwellenwert (E_min) auf einen Wert unterhalb der Mindestenergie (E_Stopp), die durchschnittlich für eine Motorstoppphase eines Stopp-Start-Betriebs benötigt wird, festgelegt wird, falls die Summe aus dem aktuellen Energieniveau (E_ist) des Energiespeichers und der prädizierten Rekuperationsenergie (E_rek) größer als die Mindestenergie (E_Stopp) ist.

8. Verfahren nach Anspruch 5 bis 7, **dadurch gekennzeichnet,**
(a) **dass** der Minimalschwellenwert (E_min) im Fahrbetrieb fortlaufend neu berechnet wird; und/oder
(b) **dass** bei Unterschreiten des Minimalschwellenwerts (E_min) des Energiespeichers im Fahrbetrieb das Energieniveau (E_ist) des Energiespeichers mittels einer Lastpunkanhebung des Verbrennungsmotors erhöht wird; und/oder
(c) **dass** der Verbrennungsmotor in einer Stopp-Phase gestartet wird, falls das Energieniveau (E_ist) im Energiespeicher während einer Stopp-Phase auf einen Wert fällt, der der Motorstartenergie (E_1) entspricht.

9. Verfahren nach einem der vorhergehenden Ansprüche, **dadurch gekennzeichnet, dass** der zweite Wert (P_lim) für die Rekuperationsleistung (P_ist) des Rekuperationsbetriebs der elektrischen Maschine (10)
(a) jeweils so festgelegt wird, dass der Energiespeicher am Ende eines nachfolgenden Rekuperationsvorgangs vollgeladen wäre, falls das Kraftfahrzeug ausgehend vom momentanen Fahrzustand bis mindestens auf einen Geschwindigkeitsschwellenwert (v_min) abgebremst würde, wobei der Geschwindigkeitsschwellenwert vorzugsweise eine Geschwindigkeitsgrenze angibt, oberhalb derer Energie im Rekuperationsbetrieb rekuperierbar ist und unterhalb derer kein Rekuperationsbetrieb möglich ist; und/oder
(b) gemäß der Formel P_lim = ((E_max - E_ist) + P_Bord*t_rek))/ t_rek berechnet wird, wobei E_max ein maximales und E_ist ein aktuelles Energieniveau des Energiespeichers (9) und P_Bord eine durchschnittliche Bordnetzlast angibt und t_rek eine Abschätzung für eine Dauer eines Rekuperationsvorgangs angibt, der aus der Differenz aus aktueller Fahrzeuggeschwindigkeit (v_ist) und dem Geschwindigkeitsschwellenwert (v_min) geteilt durch eine angenommene durchschnittliche Fahrzeugverzögerung abgeschätzt werden kann.

10. Vorrichtung zur Steuerung eines Rekuperationsbetriebs in einem Hybridfahrzeug, das einen Verbrennungsmotor, eine elektrische Maschine (10) und eine Stopp-Start-Automatik-Vorrichtung, mittels derer die Brennkraftmaschine unter vorbestimmten Bedingungen automatisch abgeschaltet und gestartet werden kann, umfasst und ein Bordnetz (1) mit einem Energiespeicher (9) aufweist, der im Rekuperationsbetrieb von der elektrischen Maschine (10) mit elektrischer Energie aufladbar ist, **dadurch gekennzeichnet, dass** die Vorrichtung eingerichtet ist, das Verfahren gemäß einem der Ansprüche 1 bis 9 durchzuführen.

11. Kraftfahrzeug, insbesondere Nutzfahrzeug, aufweisend eine Vorrichtung nach Anspruch 10.

## Claims

1. Method for recuperating energy in a hybrid vehicle, which hybrid vehicle comprises an internal combustion engine, an electrical machine (10) and preferably an automatic stop/start apparatus by means of which the internal combustion engine can be automatically turned off and started under predetermined conditions, and which hybrid vehicle has an on-board electrical system (1) comprising an energy store (9) which can be charged with electrical energy by the electrical machine (10) during the recuperation operation, wherein a recuperation power (P_act) for a recuperation operation of the electrical machine (10)
(a) is set to a first value (P_max) which allows a recuperation operation with a maximum generator capacity of the electrical machine if an actual energy level (E_act) of the energy store (9) is lower than or equal to a threshold value (E_3); and
(b) is set to a second value (P_lim) which is lower than the first value (P_max) and allows a recuperation operation with a reduced generator capacity of the electrical machine (10) if the actual energy level (E_act) of the energy store (9) is greater than the threshold value (E_3),
**characterized**
**in that** a recuperation energy (E_rec) is predicted for an actual operating state of the motor vehicle, the said recuperation energy indicating how much energy would be able to be recuperated if the motor vehicle were to be braked starting from the current driving state at least to a speed threshold value (v_min), wherein the speed threshold value preferably indicates a speed limit above which energy can be recuperated during the recuperation operation and below which a recuperation operation is not possible.

2. Method according to Claim 1, **characterized in that** the threshold value (E_3) is defined as the difference between a maximum energy level (E_max) of the energy store (9) and the predicted recuperation energy (E_rec).

3. Method according to Claim 1 or 2, **characterized in that** the predicted recuperation energy (E_rec) is determined depending on an actual vehicle speed, an average vehicle deceleration, an on-board electrical system load and a maximum generator capacity (P_max) of the recuperation operation.

4. Method according to one of the preceding claims, **characterized in that** the threshold value (E_3) is continuously recalculated during driving.

5. Method according to one of the preceding Claims 1 to 4, **characterized in that** a minimum threshold value (E_min) for an energy level of the energy store (9) is determined depending on the predicted recuperation energy (E_rec) and a minimum energy (E_stop) which is required on average for a motor stop phase of a stop/start operation.

6. Method according to Claim 5, **characterized in that** the minimum energy (E_stop) which is required on average for a motor stop phase of a stop/start operation is determined as a sum of a motor start energy (E_1) for the start/stop operation and an energy requirement (E_2) for an on-board electrical system supply during a stop phase of the stop/start operation, wherein the energy requirement (E_2) for the on-board electrical system supply is determined depending on an average stationary time for the vehicle in the stop phase and an average on-board electrical system load.

7. Method according to either of Claims 5 and 6, **characterized in that** the minimum threshold value (E_min) is set to a value below the minimum energy (E_stop) which is required on average for a motor stop phase of a stop/start operation if the sum of the actual energy level (E_act) of the energy store and the predicted recuperation energy (E_rec) is greater than the minimum energy (E_stop).

8. Method according to Claims 5 to 7, **characterized**
(a) **in that** the minimum threshold value (E_min) is continuously recalculated during driving; and/or
(b) **in that** the energy level (E_act) of the energy store is increased by means of raising the load point of the internal combustion engine when the minimum threshold value (E_min) of the energy store is undershot during driving; and/or
(c) **in that** the internal combustion engine is started in a stop phase if the energy level (E_act) in the energy store drops to a value which corresponds to the motor start energy (E_1) during a stop phase.

9. Method according to one of the preceding claims, **characterized in that** the second value (P_lim) for the recuperation power (P_act) of the recuperation operation of the electrical machine (10)
(a) is in each case set such that the energy store would be fully charged at the end of a subsequent recuperation process if the motor vehicle were to be braked from the current driving state at least to a speed threshold value (v_min), wherein the speed threshold value preferably indicates a speed limit above which energy can be recuperated during the recuperation operation and below which a recuperation operation is not possible; and/or
(b) is calculated in accordance with the formula P_lim = ((E_max - E_act) + P_on-board*t_rec))/ t_rec, where E_max indicates a maximum energy level and E_act indicates an actual energy level of the energy store (9) and P_on-board indicates an average on-board electrical system load and t_rec indicates an estimate for a duration of a recuperation process which can be estimated from the difference between the actual vehicle speed (v_act) and the speed threshold value (v_min) divided by an assumed average vehicle deceleration.

10. Apparatus for controlling a recuperation operation in a hybrid vehicle, which hybrid vehicle comprises an internal combustion engine, an electrical machine (10) and an automatic stop/start apparatus by means of which the internal combustion engine can be automatically turned off and started under predetermined conditions, and which hybrid vehicle has an on-board electrical system (1) comprising an energy store (9) which can be charged with electrical energy by the electrical machine (10) during the recuperation operation, **characterized in that** the apparatus is designed to carry out the method according to one of Claims 1 to 9.

11. Motor vehicle, in particular utility vehicle, having an apparatus according to Claim 10.

## Revendications

1. Procédé de récupération d'énergie dans un véhicule hybride, lequel comporte un moteur à combustion interne, une machine électrique (10) et de préférence un dispositif automatique d'arrêt-démarrage, au moyen duquel le moteur à combustion interne peut être arrêté et démarré automatiquement sous des conditions prédéterminées, et possède un réseau de bord (1) pourvu d'un accumulateur d'énergie (9) qui, en mode de récupération, peut être chargé en énergie électrique par la machine électrique (10), une puissance de récupération (P_ist) pour un mode de récupération de la machine électrique (10)
(a) étant fixée à une première valeur (P_max), qui rend possible un mode de récupération avec une capacité de puissance de générateur maximale de la machine électrique dans le cas où un niveau d'énergie actuel (E_ist) de l'accumulateur d'énergie (9) est inférieur ou égal à une valeur de seuil (E_3) ; et
(b) étant fixée à une deuxième valeur (P_lim), laquelle est inférieure à la première valeur (P_max) et rend possible un mode de récupération avec une capacité de puissance de générateur réduite de la machine électrique (10), dans le cas où le niveau d'énergie actuel (E_ist) de l'accumulateur d'énergie (9) est supérieur à la valeur de seuil (E_3)
**caractérisé en ce**
**que** pour un état de fonctionnement actuel du véhicule automobile, une énergie de récupération (E_rek) est prédite, laquelle indique la quantité d'énergie qui serait récupérable dans le cas où le véhicule automobile serait freiné à partir de l'état de déplacement momentané jusqu'à au moins une valeur de seuil de vitesse (v_min), la valeur de seuil de vitesse indiquant de préférence une limite de vitesse au-dessus de laquelle de l'énergie est récupérable en mode de récupération et au-dessous de laquelle aucune mode de récupération n'est possible.

2. Procédé selon la revendication 1, **caractérisé en ce que** la valeur de seuil (E_3) est spécifiée en tant que différence entre un niveau d'énergie maximal (E_max) de l'accumulateur d'énergie (9) et l'énergie de récupération (E_rek) prédite.

3. Procédé selon la revendication 1 ou 2, **caractérisé en ce que** l'énergie de récupération (E_rek) prédite est déterminée en fonction d'une vitesse actuelle du véhicule, d'un ralentissement moyen du véhicule, d'une charge du réseau de bord et d'une capacité de puissance de générateur maximale (P_max) du mode de récupération.

4. Procédé selon l'une des revendications précédentes, **caractérisé en ce que** la valeur de seuil (E_3) est continuellement recalculée en mode de déplacement.

5. Procédé selon l'une des revendications précédentes 1 à 4, **caractérisé en ce qu'**une valeur de seuil minimale (E_min) est déterminée pour un niveau d'énergie de l'accumulateur d'énergie (9) en fonction de l'énergie de récupération (E_rek) prédite et d'une énergie minimale (E_Stopp) qui est nécessaire en moyenne pour une phase d'arrêt du moteur d'un mode d'arrêt-démarrage.

6. Procédé selon la revendication 5, **caractérisé en ce que** l'énergie minimale (E_Stopp), qui est requise en moyenne pour une phase d'arrêt du moteur d'un mode d'arrêt-démarrage, est déterminée en tant que somme d'une énergie de démarrage du moteur (E_1) pour le mode d'arrêt-démarrage et un besoin en énergie (E_2) pour une alimentation du réseau de bord pendant une phase d'arrêt du mode d'arrêt-démarrage, le besoin en énergie (E_2) pour l'alimentation du réseau de bord étant déterminée en fonction du temps d'immobilisation moyen du véhicule de la phase d'arrêt et d'une charge moyenne du réseau de bord.

7. Procédé selon l'une des revendications 5 ou 6, **caractérisé en ce que** la valeur de seuil minimale (E_min) est spécifiée à une valeur au-dessous de l'énergie minimale (E_Stopp), qui est requise en moyenne pour une phase d'arrêt du moteur d'un mode d'arrêt-démarrage, dans le cas où la somme du niveau d'énergie actuel (E_ist) de l'accumulateur d'énergie et de l'énergie de récupération (E_rek) prédite est supérieure à l'énergie minimale (E_Stopp).

8. Procédé selon les revendications 5 à 7, **caractérisé en ce**
(a) **que** la valeur de seuil minimale (E_min) est continuellement recalculée en mode de déplacement ; et/ou
(b) **qu'**en cas de franchissement vers le bas de valeur de seuil minimale (E_min) de l'accumulateur d'énergie en mode de déplacement, le niveau d'énergie (E_ist) de l'accumulateur d'énergie est augmenté au moyen d'un relèvement du point de charge du moteur à combustion interne ; et/ou
(c) **que** le moteur à combustion interne est démarré dans une phase d'arrêt dans le cas le niveau d'énergie (E_ist) dans l'accumulateur d'énergie pendant une phase d'arrêt chute à une valeur qui correspond à l'énergie de démarrage du moteur (E_1).

9. Procédé selon l'une des revendications précédentes, **caractérisé en ce que** la deuxième valeur (P_lim) pour la puissance de récupération (P_ist) du mode de récupération de la machine électrique (10)
(a) est respectivement spécifiée de telle sorte que l'accumulateur n'énergie serait entièrement charge à la fin d'un processus de récupération qui suit dans le cas où le véhicule automobile aurait été freiné à partir de l'état de déplacement momentané jusqu'à au moins une valeur de seuil de vitesse (v_min), la valeur de seuil de vitesse indiquant de préférence une limite de vitesse au-dessus de laquelle de l'énergie est récupérable en mode de récupération et au-dessous de laquelle aucune mode de récupération n'est possible ; et/ou
(b) est calculée conformément à la formule P_lim = ((E_max - E_ist) + P_Bord*t_rek))/t_rek, E_max désignant un niveau d'énergie maximal et E_ist un niveau d'énergie actuel de l'accumulateur d'énergie (9) et P_Bord une charge moyenne du réseau de bord et t_rek désignant une estimation pour une durée d'un processus de récupération, laquelle peut être estimée à partir de la différence entre la vitesse actuelle du véhicule (v_ist) et la valeur de seuil de vitesse (v_min) divisée par un ralentissement moyen supposé du véhicule.

10. Dispositif pour commander un mode de récupération dans un véhicule hybride, lequel comporte un moteur à combustion interne, une machine électrique (10) et un dispositif automatique d'arrêt-démarrage, au moyen duquel le moteur à combustion interne peut être arrêté et démarré automatiquement sous des conditions prédéterminées, et possède un réseau de bord (1) pourvu d'un accumulateur d'énergie (9) qui, en mode de récupération, peut être chargé en énergie électrique par la machine électrique (10), **caractérisé en ce que** le dispositif est conçu pour mettre en œuvre un procédé selon l'une des revendications 1 à 9.

11. Véhicule automobile, notamment véhicule utilitaire, possédant un dispositif selon la revendication 10.
